# EUROPÄISCHE PATENTSCHRIFT

(11) **EP 3 262 918 B1**
(45) Veröffentlichungstag und Bekanntmachung des Hinweises auf die Patenterteilung: **09.10.2019**
(21) Anmeldenummer: 17160513.2
(22) Anmeldetag: 13.03.2017
(51) Int. Cl.: A01D 65/00, A01D 65/02

(54) **ÄHRENHEBER**
CROP LIFTER
RELEVEUR D'ÉPIS

(30) Priorität: 30.06.2016 DE 102016112052
(43) Veröffentlichungstag der Anmeldung: 03.01.2018
(73) Patentinhaber: CLAAS Selbstfahrende Erntemaschinen GmbH, 33428 Harsewinkel (DE)
(72) Erfinder: Kiffmeier, Norbert, 33428 Harsewinkel (DE); Köckemann, Josef, 33442 Herzebrock-Clarholz (DE); Hartmann, Thomas, 33442 Herzebcok-Clarholz (DE)
(74) Vertreter: CLAAS Gruppe

(56) Entgegenhaltungen:
- DE-A1- 1 507 366
- DE-A1- 1 939 650
- DE-A1- 2 928 871
- DE-A1- 3 300 769
- DE-C1- 10 123 248
- GB-A- 2 028 088

## Beschreibung

Die vorliegende Erfindung betrifft ein Schneidwerk gemäß dem Oberbegriff des Anspruchs 1.

Schneidwerke weisen entlang eines Mähbalkens verteilt angeordnete Mähfinger auf. Diese führen einen Messerbalken und bilden die Gegenschneide für die Schneiden der am hin- und hergehend bewegbaren Messerbalken angebrachten Mähklingen. Um abgeknicktes oder lagerndes Halmgut sicher mähen zu können werden Ährenheber eingesetzt, die das Halmgut anheben. Solche Ährenheber bestehen aus einer Tragschiene, die mit ihrem ersten Ende am Mähbalken festgelegt ist und die sich ferner mittels einer Aufnahmeführung und daran angebrachten Haltemitteln an der Mähfingerspitze abstützen. Zwei zueinander parallele Schenkel der Aufnahmeführung umschließen den Mähfinger abschnittsweise. Das zweite Ende der Tragschiene ist mit einem Halmheber verbunden, der dazu unter einem Winkel geneigt angeordnet ist. Die Aufnahmeführung dient dazu, den Ährenheber parallel zur Fahrtrichtung der Erntemaschine ausgerichtet zu halten. Damit der Ährenheber mit seiner Spitze, die durch den Stossbereich des Halmhebers mit der Tragschiene gebildet wird, am Boden geführt wird und den Bodenunebenheiten folgen kann, besteht die Tragschiene vorzugsweise aus einem Federstahl. Dabei bewegt sich die Aufnahmeführung relativ zur Mähfingerspitze.

Ein solcher Ährenheber ist aus der DE 101 13 107 A1 bekannt. Eine an die Tragschiene angenietete U-förmige Aufnahmeführung ist mittels eines Steckbolzens, der sich durch die beiden vertikalen Schenkel der Aufnahmeführung erstreckt und der sich auf der Oberseite des Mähfingers abstützt, fixiert. Ein erstes Ende der Tragschiene ist durch eine gabelförmige Ausbildung mit einer durch eine Schraube festgelegte Scheibe mit Ringnut an dem Mähbalken festlegbar.

Die Druckschrift GB 2 028 088 A offenbart einen Ährenheber gemäß dem Oberbegriff des Patentanspruchs 1. Dieser Ährenheber weist eine Haltevorrichtung mit einem Haltebügel zum Befestigen des Ährenhebers am Mähfinger auf.

Der Erfindung liegt die Aufgabe zugrunde, ein Schneidwerk mit einem Ährenheber derart weiterzubilden, dass der Ährenheber auf einfachere Weise schnell und werkzeuglos montierbar und demontierbar ist.

Diese Aufgabe wird durch ein Schneidwerk mit den Merkmalen des Anspruchs 1 gelöst. Vorteilhafte Weiterbildungen der Erfindung sind Gegenstand der abhängigen Unteransprüche.

Gemäß dem Anspruch 1 wird ein Schneidwerk, welches einen Ährenheber sowie einen Mähbalken mit davon vorstehend angeordneten Mähfingern aufweist, vorgeschlagen, wobei der Ährenheber eine biegeelastische Tragschiene mit einem ersten Ende zur Anordnung an dem Mähbalken und einem zweiten Ende, einen an dem zweiten Ende der Tragschiene angeordneten Halmheber, eine auf der dem Halmheber zugewandten Seite der Tragschiene angeordnete Aufnahmeführung, welche den Mähfinger in an dem Mähbalken montierter Position des Ährenhebers abschnittsweise umschließt, umfasst und wobei an der Aufnahmeführung ein bügelförmiges Verriegelungsmittel angeordnet ist, welches mit der Aufnahmeführung in verriegelter Stellung formschlüssig in Eingriff steht und mit einer Federkraft belastet ist, wobei die dabei auf das Verriegelungsmittel einwirkende Federkraft von diesem aufbringbar ist. Es werden die Eigenschaften eines aus einem federelastischen Material, insbesondere einem Federstahl, bestehenden bügelförmigen Verriegelungsmittels genutzt, um eine Federkraft aufzubringen, welche das Verriegelungsmittel zuverlässig in seiner durch Formschluss eingenommenen Verriegelungsstellung hält. Das Vorhandensein eines zusätzlichen, dem Verriegelungsmittel und der Aufnahmeführung zugeordneten Federelementes, welches eine Federkraft auf das Verriegelungsmittel oder die Aufnahmeführung ausübt, ist somit nicht notwendig, wodurch die Montage und Demontage des Ährenhebers an dem Schneidwerk vereinfacht wird. Aufgrund des Formschlusses zwischen der Aufnahmeführung und dem Verriegelungsmittel ist das Verriegelungsmittel auf einfache Weise verriegelbar und entriegelbar, um den Ährenheber schnell montieren beziehungsweise demontieren zu können.

Die Tragschiene weist im Bereich des ersten Endes einen Abschnitt mit einem im Wesentlichen wellenförmig geschwungenen Verlauf auf. Hierbei kann, ausgehend vom zweiten Ende der Tragschiene, zunächst ein erstes im Wesentlichen konvex verlaufendes Segment im Bereich des ersten Endes der Tragschiene vorgesehen sein. An dieses erste konvex verlaufende Segment können sich ein im Wesentlichen konkaves und ein weiteres im Wesentlichen konvexes Segment anschließen. Das weitere konvexe Segment kann dabei das gabelförmige erste Ende der Tragschiene ausbilden.

Das Schneidwerk zeichnet sich dadurch aus, dass sich die Tragschiene mit ihrem ersten konvexen Segment des wellenförmigen Abschnittes an dem Mähfinger abstützt. Die abschnittsweise wellenförmige Ausgestaltung im Bereich des ersten Endes der Tragschiene hat den Vorteil, dass die im Übrigen einen im Wesentlichen geraden Verlauf aufweisende Tragschiene während des Hochschwenkens früher gegen die Unterseite des Mähfingers stößt und sich an diesem abstützt. Das erste konvexe Segment fungiert dabei als eine Art Widerlager, so dass das Hochschwenken bei der Montage entgegen der Federkraft der Tragschiene erfolgt. Auf diese Weise wird ein sicherer Halt der Tragschiene am Mähfinger erreicht.

Vorzugsweise kann die Tragschiene mit ihrem ersten Ende auf einen unterhalb des Mähfingers angeordneten Befestigungsabschnitt eines Befestigungselementes aufsteckbar und relativ zu dem Befestigungselement um eine horizontale Achse in Richtung des Mähfingers schwenkbar sein, bis sich die Tragschiene im Bereich ihres ersten Endes an dem Mähfinger abschnittsweise abstützt. Durch die Ausführung als eine reine Steckverbindung wird der Einsatz von Werkzeug bei der Montage beziehungsweise Demontage des Ährenhebers überflüssig.

Insbesondere kann das Befestigungselement der Befestigung des Mähfingers an dem Messerbalken dienen. Durch das Vereinen zweier Funktionen in dem Befestigungselement, die Aufnahme der Tragschiene und die gleichzeitige Fixierung des Mähfingers an dem Mähbalken beziehungsweise einem Rahmenteil des Schneidwerkes, kann die Anzahl der Komponenten reduziert werden. Dies führt zu einer Vereinfachung der Montage und Demontage des Ährenhebers, da währenddessen weniger Komponenten zu händeln sind.

Hierzu kann das Befestigungselement einen Befestigungsabschnitt umfassen, der aus einem ersten plattenförmigen Element und einem zweiten plattenförmigen Element gebildet ist, die parallel zueinander beabstandet angeordnet sind, und einen sich an das erste plattenförmige Element anschließenden zylindrischen Abschnitt. Mittels des Befestigungselementes kann eine unabhängige Befestigung von Mähfinger und Ährenheber am Mähbalken oder am Schneidwerksrahmen erreicht werden. Der mit einem Gewindeabschnitt versehene zylindrische Abschnitt des Befestigungselementes kann sich durch entsprechende Durchbohrungen in dem Mähfinger und dem Schneidwerksrahmen erstrecken. Der zylindrische Abschnitt des Befestigungselementes kann mittels einer Mutter an diesem fixiert werden. Das erste Ende der Trägerschiene ist zwischen den plattenförmigen Elementen des Befestigungsabschnittes festlegbar. Die plattenförmigen Elemente können eine etwa kreuzförmige oder im Wesentlichen runde Form aufweisen.

Weiterhin kann der Befestigungsabschnitt zwischen seinen plattenförmigen Elementen einen Vierkantansatz aufweisen. Der Vierkantansatz kann ein Verdrehen des auf das als Bolzen ausgeführte Befestigungselement aufgesteckten Ährenhebers um die Längsachse des Befestigungselementes verhindern. Hierzu kann der Vierkantansatz im Wesentlichen quaderförmig ausgeführt sein, wobei die längeren Seitenflächen dem Sichern des auf diese aufschiebbaren Ährenhebers dient.

Vorteilhafterweise kann das erste Ende der Tragschiene gabelförmig ausgebildet sein. Somit kann die Tragschiene mit ihrem ersten Ende auf das Befestigungselement aufgesteckt werden, wobei das gabelförmige erste Ende zwischen den plattenförmigen Elementen des Befestigungsabschnittes eingefasst ist. Zwischen dem ersten Ende der Tragschiene und dem Befestigungselement besteht ebenfalls nur eine formschlüssige Verbindung. Die längeren Seitenflächen des im Wesentlichen quaderförmigen Vierkantansatzes werden von dem gabelförmig ausgebildeten ersten Ende der Tragschiene im Wesentlichen formschlüssig aufgenommen.

Besonders vorteilhaft ist es, wenn die Aufnahmeführung lösbar mit der Tragschiene verbunden ist. So lässt sich die Aufnahmeführung und mit dieser das Verriegelungsmittel auf der Tragschiene eines anderen Ährenhebers befestigen, wenn dieser aus Verschleißgründen ausgewechselt werden muss. Hierzu kann die Aufnahmeführung beispielsweise mittels einer Schraubverbindung mit der Tragschiene verbunden sein.

Vorzugsweise können vertikal verlaufende Schenkel der Aufnahmeführung auf ihrer dem Mähbalken zugewandten Seite jeweils zumindest eine Ausnehmung aufweisen, in welche an dem Verriegelungsmittel angeordnete Raststege eingreifen, so dass das Verriegelungsmittel um die Raststege schwenkbar ist. Die jeweilige Ausnehmung erstreckt sich dabei zumindest abschnittsweise im Wesentlichen parallel zu der Tragschiene. Mehrere, in unterschiedlichen Abständen zur Tragschiene angeordnete Ausnehmungen in den vertikal verlaufenden Schenkeln ermöglicht dabei eine Höhenanpassung der Tragschiene im Verhältnis zum Mähfinger. Dabei können die Raststege an dem Verriegelungsmittel angeformt sein, beispielsweise durch eine einteilige Ausführung des Verriegelungsmittels. Hierzu kann das Verriegelungsmittel als ein mehrfach abgewinkeltes flächiges Bauteil ausgeführt sein, welches aus Federstahl besteht. Zur Montage ist das Verriegelungsmittel mittels der Raststege in die Ausnehmungen der Aufnahmeführung einführbar. Dazu kann die Aufnahmeführung ein im Wesentlichen U-förmiges Profil aufweisen.

Weiterhin können die vertikal verlaufenden Schenkel der Aufnahmeführung auf ihrer dem Mähbalken abgewandten Seite jeweils mit zumindest einer Verriegelungsprofilierung versehen sein, welche mit einer korrespondierenden Profilierung an dem Verriegelungsmittel in Eingriff bringbar ist. Die zumindest eine Verriegelungsprofilierung an den Schenkeln kann beispielsweise als eine vorstehende Rastnase ausgeführt sein. Um das Verriegelungsmittel mit der Aufnahmeführung in Eingriff zu bringen, kann das Verriegelungsmittel hierzu ein im Wesentlichen C-förmiges Profil aufweisen. An einem Mittenabschnitt des Verriegelungsmittels sind unter einem Winkel zu diesem geneigt ein langer Schenkel und ein kurzer Schenkel angeformt. An dem kurzen Schenkel des Verriegelungsmittels sind die Rastnasen angeordnet, während der lange Schenkel eine Profilierung aufweist, die mit einer korrespondierenden Verriegelungsprofilierung an den Schenkeln der Aufnahmeführung in Eingriff bringbar ist. Zur Verriegelung werden zunächst die Rastnasen des Verriegelungsmittels mit der jeweiligen Ausnehmung in Eingriff gebracht. Durch das Schwenken um die von den Rastnasen gebildete Drehachse in Richtung der Tragschiene lässt sich dann die jeweilige Verriegelungsprofilierung an den vertikal verlaufenden Schenkeln mit der korrespondierenden Profilierung an dem Verriegelungsmittel in Eingriff bringen.

Gemäß einer alternativen Ausführungsform kann das Verriegelungsmittel als eine Bügelanordnung ausgebildet sein, die einen ersten, an der Aufnahmeführung mit einem Ende drehbar gelagert angeordneten Bügel und einen zweiten Bügel umfasst, der schwenkbar am freien Ende des ersten Bügels angeordnet ist. Die Aufnahmeführung kann von zwei im Wesentlichen senkrecht auf der Tragschiene stehenden Wandabschnitten gebildet werden, die sich abschnittsweise in Längsrichtung der Tragschiene erstrecken. Die Wandabschnitte können derart zueinander angeordnet sein, dass sie in Richtung des auslaufenden Mähfingers sich verjüngend angeordnet sind. Die Lagerung des ersten Bügels an den Wandabschnitten dient als Verliersicherung des Verriegelungsmittels. Dabei kann der jeweilige Wandabschnitt an seiner der Tragschiene abgewandten Oberseite einen Vorsprung aufweisen, welcher mit einer Durchtrittsöffnung versehen ist. Die jeweilige Durchtrittsöffnung dient der Aufnahme eines freien Endes des ersten Bügels. Ein Ährenheber gemäß dieser Ausführungsform weist den zusätzlichen Vorteil auf, dass dieser ohne Verlierelemente ausgeführt ist. Das heißt, dass alle der Verriegelung dienenden Bauteile des Verriegelungsmittels mit dem Ährenheber unmittelbar oder mittelbar verbunden sind. Insbesondere können die vertikal verlaufenden Wandabschnitte der Aufnahmeführung auf ihrer dem Mähbalken zugewandten Seite mit zumindest einer Ausnehmung versehen sein, mit welchen der zweite Bügel formschlüssig in Eingriff bringbar ist. Das Verriegelungsmittel ist in den Ausnehmungen schwenkbar gelagert. Die jeweilige Ausnehmung erstreckt sich dabei zumindest abschnittsweise im Wesentlichen parallel zu der Tragschiene. Mehrere, in unterschiedlichen Abständen zur Tragschiene angeordnete Ausnehmungen in den vertikal verlaufenden Wandabschnitten ermöglicht dabei eine Höhenanpassung der Tragschiene im Verhältnis zum Mähfinger.

Weiterhin können die vertikal verlaufenden Wandabschnitte der Aufnahmeführung auf ihrer dem Mähbalken abgewandten Seite Verriegelungsprofilierungen aufweisen, mit welchen der erste Bügel abschnittsweise in Eingriff bringbar ist.

Die vorliegende Erfindung wird nachstehend anhand von in den Zeichnungen dargestellten Ausführungsbeispielen näher erläutert.

Es zeigen:
- Fig. 1: eine schematische Ansicht eines Schneidwerks für eine Erntemaschine in Draufsicht;
- Fig. 2: eine Teilschnittansicht eines Mähbalkens 5 mit einem am Schneidwerksrahmen angeordneten Ährenheber;
- Fig. 3: eine Teilschnittansicht gemäß Fig. 2 des auf einen Befestigungsabschnitt eines Befestigungselementes aufgesteckten Ährenhebers;
- Fig. 4: eine Teilschnittansicht gemäß Fig. 3 des sich an der Unterseite eines Mähfingers abstützenden Ährenhebers;
- Fig. 5: eine perspektivische Ansicht eines Befestigungselementes;
- Fig. 6: eine Teilansicht eines am Mähbalken mittels eines Verriegelungsmittels befestigten Ährenhebers gemäß einer zweiten Ausführungsform.

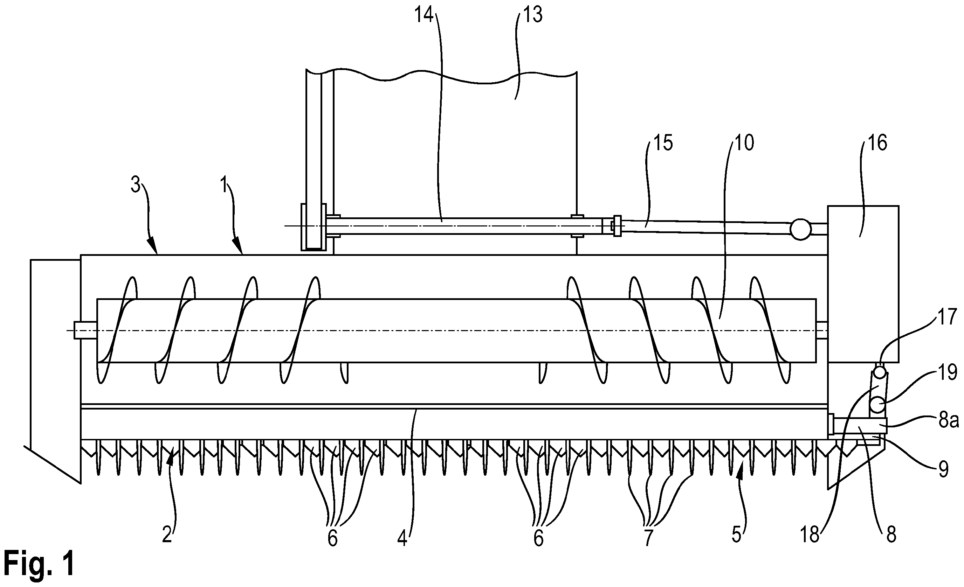

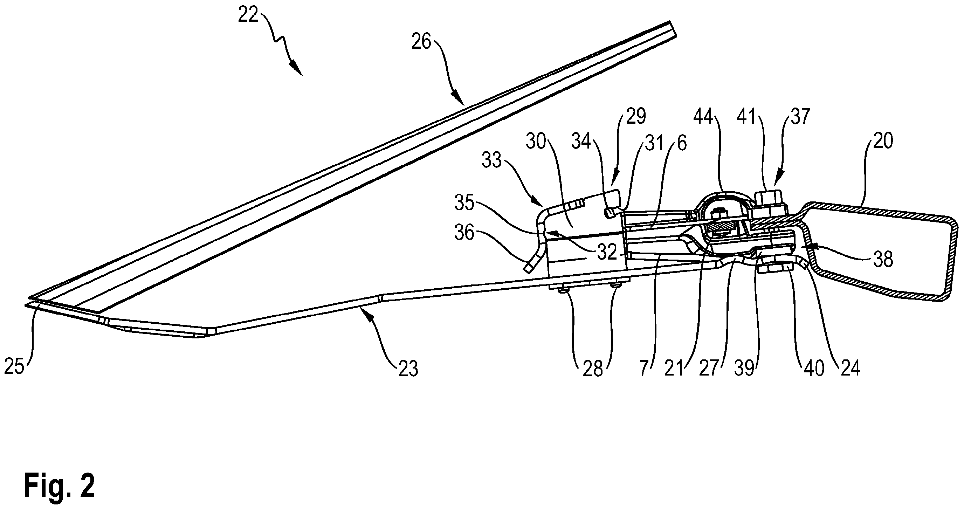

In der Figur 1 ist mit 1 ein Schneidwerk dargestellt, das aus einem Schneidtisch 2 und einer Schneidwerksmulde 3 besteht. Wie eine in dieser Ansicht erkennbare Trennebene 4 verdeutlicht, ist der Schneidtisch baulich von der Schneidwerksmulde 3 getrennt, so dass er sich gegenüber dieser in Richtung des Erntevorgangs oder in entgegengesetzter Richtung verstellen lässt. Der Schneidtisch 2 nimmt einen Mähbalken 5 auf, der aus einer in Fig. 1 nicht näher dargestellten, insbesondere mehrteiligen, Messerschiene 21 und einer Vielzahl darauf befestigter Messerklingen 6 besteht. Dabei sind die Messerschiene 21 und die Mähklingen 6 in Mähfingern 7 und Messerdaumen 44 geführt, welche am Schneidtisch 2 befestigt sind, wie die Darstellung in Fig. 2 zeigt.

Weiterhin ist am Ende des Mähbalkens 5 ein Messergetriebe 8 angeordnet, wobei dieses Messergetriebe 8 ein Gehäuse aufweist und den Mähbalken 5 mit Hilfe eines Kurbelzapfens 9 antreibt. Die Schneidwerksmulde 3 nimmt einen Querförderer 10 auf, der mit gegenläufigen Schneckengängen 11 und 12 versehen ist, so dass das von den Messerklingen 6 im Zusammenwirken mit den Mähfingern 7 geschnittene Erntegut mittig der Schneidwerksmulde 3 zusammengeführt wird. Als Querförderer 10 können auch angetriebene, endlos umlaufende Längs- und Querförderbänder zum Einsatz kommen, wie sie bei Bandschneidwerken, sogenannten Drapern, Anwendung finden. Von dort aus wird das Erntegut an einen Schrägförderer 13 übergeben, der dieses anschließend einer nicht dargestellten Aufbereitungseinrichtung, wie beispielsweise einer Dresch- und Trenneinrichtung eines Mähdreschers zuführt.

Das gesamte Schneidwerk 1 ist vorzugsweise durch eine nicht näher dargestellte Kuppeleinrichtung mit dem Schrägförderer 13 verbindbar, so dass es sich gegen einen anderen Erntevorsatz austauschen und außerdem für eine Straßenfahrt der Erntemaschine hinter dieser auf einem Anhänger transportieren lässt. Dabei erfolgt der Antrieb des Schneidwerks 1 von einer im Schrägförderer 13 angeordneten Welle 14 aus über eine Kardanwelle 15 auf eine Getriebebaugruppe 16. Diese Getriebebaugruppe 16 treibt zum einen das Messergetriebe 8 und zum anderen den Querförderer 10 sowie eine nicht näher dargestellte Haspel an. Zum Antrieb des Messergetriebes 8 geht, wie der Figur 1 entnommen werden kann, von der Getriebebaugruppe 16 eine Abtriebswelle 17 aus, die mit einer Gelenkwelle 18 verbunden ist, wobei diese Gelenkwelle 18 mit ihrem anderen Ende trieblich mit einer Eingangswelle 19 des Messergetriebes 8 verbunden ist.

Die Darstellung in Fig. 2 zeigt eine Teilschnittansicht des Mähbalkens 5 mit einem am Schneidwerksrahmen 20 angeordneten Ährenheber 22. Entlang des Mähbalkens 5 ist eine Vielzahl von Ährenhebern 22 angeordnet. Die Ährenheber 22 dienen dazu, Halmgut anzuheben, um abgeknicktes oder lagerndes Halmgut sicher mähen zu können. Der Ährenheber 22 umfasst eine biegeelastische Tragschiene 23 mit einem ersten Ende 24 zur Anordnung an dem Mähbalken 5 und einem zweiten Ende 25, an dem ein Halmheber 26 angeordnet ist. Die Tragschiene 23 besteht aus einem federelastischen Stahl. Die Tragschiene 23 weist im Bereich des ersten Endes 24 einen Abschnitt 27 mit einem im Wesentlichen wellenförmigen Verlauf auf. Hierbei ist, ausgehend vom zweiten Ende 25 der Tragschiene 23, zunächst ein erstes im Wesentlichen konvex verlaufendes Segment vorgesehen. An dieses können sich ein im Wesentlichen konkaves und ein weiteres im Wesentlichen konvexes Segment anschließen. Das erste konvexe Segment fungiert dabei als eine Art Widerlager, so dass das Schwenken entgegen der von der Tragschiene 23 hervorgerufenen Federkraft erfolgt.

Auf der dem Halmheber 26 zugewandten Seite der Tragschiene 23 ist eine Aufnahmeführung 29 gemäß einer ersten Ausführungsform angeordnet, die Teil einer Verriegelungseinrichtung ist, mit der der jeweilige Ährenheber 22 werkzeuglos montierbar und demontierbar ist, wie weiter unten ausgeführt wird. Die Aufnahmeführung 29 ist mittels einer Schraubverbindung 28 lösbar mit der Tragschiene 23 verbunden. Die Aufnahmeführung 29 ist im Wesentlichen U-förmig ausgebildet. Ihre zueinander parallelen Schenkel 30 erstrecken sich ausgehend von der Tragschiene 23 in Richtung des Halmhebers 26 nach oben. Die Schenkel 30 umschließen in der dargestellten verriegelten Stellung der Verriegelungseinrichtung den Mähfinger 7 abschnittsweise, insbesondere dessen Spitze. Die Schenkel 30 der Aufnahmeführung 29 weisen auf ihrer dem Mähbalken 5 zugewandten Seite jeweils eine Ausnehmung 31 auf. Die Ausnehmung 31 erstreckt sich zumindest abschnittsweise im Wesentlichen parallel zu der Tragschiene 23. Auf der dem Mähbalken 5 abgewandten Seite weisen die Schenkel 30 jeweils zumindest eine Verriegelungsprofilierung 32 auf. Die Verriegelungsprofilierung 32 kann, wie in Fig. 2 dargestellt, als eine hervorstehende Rastnase ausgebildet sein.

Einen weiteren Teil der Verriegelungseinrichtung bildet ein als ein mehrfach abgewinkeltes flächiges Bauteil ausgeführtes, einteiliges bügelförmiges Verriegelungsmittel 33. Das Verriegelungsmittel 33 weist einen im Wesentlichen parallel zu der Tragschiene 23 verlaufenden Mittenabschnitt auf, an den sich endseitig zwei unter einem Winkel zu dem Mittenabschnitt geneigte Schenkel unterschiedlicher Länge anschließen. An dem kürzeren Schenkel des Verriegelungsmittels 33 sind Raststege 34 angeordnet. Die einander gegenüberliegend angeordneten Raststege 34 erstrecken sich quer zur Längsachse des Verriegelungsmittels 33 nach außen und sind mit der jeweiligen Ausnehmung 31 der Schenkel 30 der Aufnahmeführung 29 in Eingriff bringbar. Die von den Ausnehmungen 31 aufgenommenen Raststege 34 bilden eine Drehachse, um die das Verriegelungsmittel 33 schwenkbar ist. Der längere Schenkel des Verriegelungsmittels 33 weist eine Profilierung 35 auf, welche mit der Verriegelungsprofilierung 32 am Schenkel 30 der Aufnahmeführung 29 in der Weise korrespondiert, dass diese in der dargestellten verriegelten Stellung formschlüssig miteinander in Eingriff stehen. Das Ende des längeren Schenkels des Verriegelungsmittels 33 ist als ein Hebelabschnitt 36 ausgebildet. Der Hebelabschnitt 36 ist an seinem freien Ende bezüglich des längeren Schenkels des Verriegelungsmittels 33 geneigt, so dass dieser zwecks Betätigung des Verriegelungsmittels 33 einfacher hintergreifbar ist. Darüber hinaus können sowohl der Mittenabschnitt des Verriegelungsmittels 33 als auch die zu der Tragschiene 23 im Wesentlichen parallel verlaufenden Oberkanten der Schenkel 30 Profilierungen aufweisen, welche in der in Fig. 2 dargestellten verriegelten Stellung des Verriegelungsmittels 33 formschlüssig miteinander in Eingriff stehen.

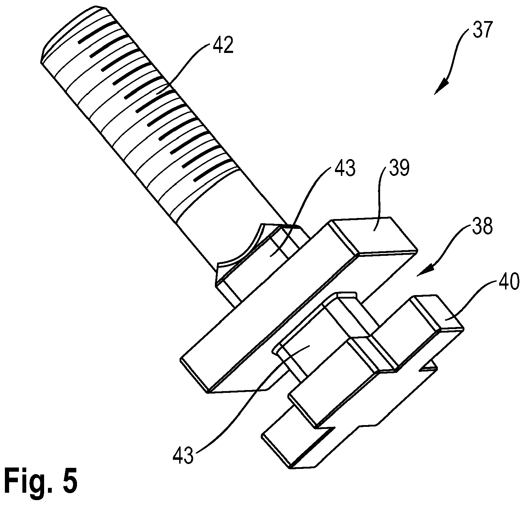

Die Befestigung des jeweiligen Mähfingers 7 erfolgt mittels eines Befestigungselementes 37, welches im Wesentlichen bolzenförmig ausgeführt ist. Das Befestigungselement 37 weist einen Befestigungsabschnitt 38 auf, an welchem der Ährenheber 22 festlegbar ist. Der Befestigungsabschnitt 38 ist aus einem ersten plattenförmigen Element 39 und einem zweiten plattenförmigen Element 40 gebildet, welche parallel zueinander beabstandet angeordnet sind. Der Abstand zwischen den beiden plattenförmigen Elementen 39 und 40 ist derart gewählt, dass das erste Ende 24 der Tragschiene 23 zwischen diesen positionierbar ist. An das erste plattenförmige Element 39 schließt sich ein zylindrischer Abschnitt 42 an, wie in Fig. 5 näher dargestellt ist, welcher den Mähfinger 7, einen Abschnitt des Schneidwerksrahmens 20 sowie den darüber liegend angeordneten Messerdaumen 44 durchdringt. Das Befestigungselement 37 wird mittels einer Mutter 41, die auf einen endseitig angeordneten Gewindeabschnitt des zylindrischen Abschnitts 42 aufschraubbar ist, fixiert. Das Befestigungselement 37 stützt sich mit seinem ersten plattenförmigen Element 39 an der Unterseite des Mähfingers 7 ab.

Wie der Darstellung eines Befestigungselementes gemäß Fig. 5 zu entnehmen ist, sind das erste und das zweite plattenförmige Element 39, 40 unterschiedlich geformt. Während das erste plattenförmige Element 39 im Wesentlichen quaderförmig ausgeführt ist, ist das zweite plattenförmige Element 40 kreuzförmig ausgebildet. Die Breite eines jeden Armes des zweiten plattenförmigen Elementes 40 ist derart gewählt, dass das gabelförmig ausgebildete erste Ende 24 der Tragschiene 23 auf den quer zur Ausnehmung am ersten Ende 24 verlaufenden Armen des zweiten plattenförmigen Elementes 40 aufliegt, während es um die parallel zu der Tragschiene 23 verlaufenden Arme des zweiten plattenförmigen Elementes 40 schwenkbar ist. Auf der dem zweiten plattenförmigen Element 40 abgewandten Seite des ersten plattenförmigen Elementes 39 befindet sich ebenfalls ein Vierkantansatz. Dieser steht im formschlüssigen Eingriff mit dem Mähfinger 7. Alternativ können das erste und das zweite plattenförmigen Element eine kreisrunde Form aufweisen.

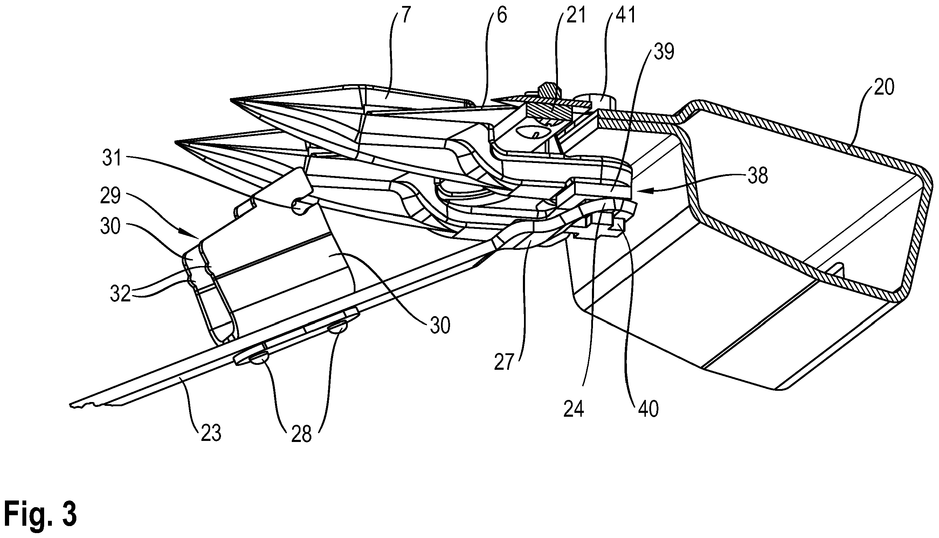

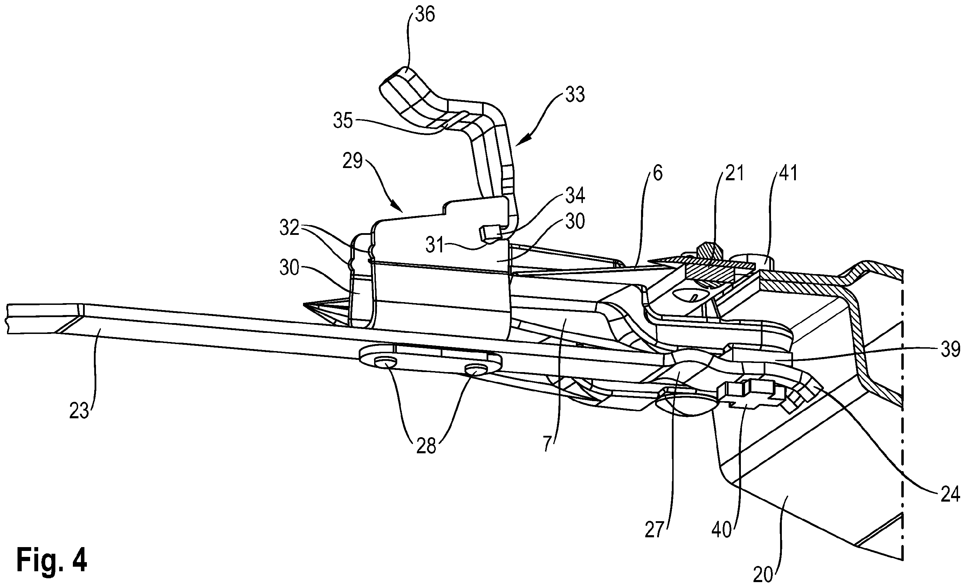

Die Montage und Fixierung des Ährenhebers 22 an dem Messerbalken 5 wird nachstehend anhand der Fig. 3 und 4 erläutert. Die Darstellung in Fig. 3 zeigt eine Teilschnittansicht gemäß Fig. 2 mit einem auf dem Befestigungsabschnitt 38 des Befestigungselementes 37 aufgesteckten Ährenheber 22. Das gabelförmige erste Ende 24 der Tragschiene 23 wird zwischen die beiden plattenförmigen Elementen 39 und 40 geschoben, bis dieses den Vierkantansatz 43 umschließt. Der Vierkantansatz 43 trägt zur Führung des Ährenhebers 22 in der Weise bei, als dass dieser nicht um die Längsachse des Befestigungselementes 37 verdrehbar ist. Zudem wird die auf der Tragschiene 23 angeordnete Aufnahmeführung 29 bezüglich des Mähfingers 7 ausgerichtet. Im Anschluss an das Aufschieben beziehungsweise aufstecken der Tragschiene 23 auf den Befestigungsabschnitt 38 wird diese in Richtung des Mähfingers 7 geschwenkt.

Mit dem Anliegen der Tragschiene 23 an der Unterseite des Mähfingers 7 wird der Mähfinger 7 von den Schenkeln 30 der Aufnahmeführung 29 abschnittsweise umschlossen. Der wellenförmige Abschnitt 27 im Bereich des ersten Endes 24 der Tragschiene 23 liegt an der Unterseite des Mähfingers 7 an. Da die Tragschiene 23 aus einem Federstahl gefertigt ist, und der wellenförmige Abschnitt 27 gegenüber den unmittelbar benachbarten Bereichen der Tragschiene 23, die ebenfalls mit der Unterseite des Mähfingers 7 in Berührung kommen können, hervorsteht, tritt eine Rückstellkraft auf, die der Schwenkbewegung des Ährenhebers 22 entgegen gerichtet ist. Für die Dauer des Verriegelungsvorganges wird der Ährenheber 22 in der hochgeschwenkten Stellung gehalten.

Nachdem die Schenkel 30 der Aufnahmeführung 29 in ihre den Mähfinger 7 abschnittsweise umschließende Position überführt wurden, wird durch die dem Schneidwerksrahmen 20 zugewandten Öffnungen der Ausnehmungen 31 der Schenkel 30 das bügelförmige Befestigungselement 37 in diese eingesetzt. Hierzu werden die beiderseits des Befestigungselementes 37 angeordneten Raststege 34 in die Ausnehmungen 31 eingeführt. Im Anschluss daran wird das Befestigungselement 37 in Richtung der Aufnahmeführung 29 geschwenkt, bis die Profilierung 35 des längeren Schenkels des Befestigungselementes 37 formschlüssig mit der Verriegelungsprofilierung 32 an den Schenkeln 30 der Aufnahmeführung 29 in Eingriff steht. Der längere Schenkel des Befestigungselementes 37 liegt abschnittsweise an den Schenkeln 30 der Aufnahmeführung 29 an.

Zwecks Demontage des Ährenhebers 22 wird zunächst der Hebelabschnitt 36 umgriffen und in Richtung des Schneidwerkrahmens 20 nach oben geschwenkt. Dies geschieht entgegen der von dem Befestigungselement 37 selbst aufgebrachten Federkraft. Anschließend wird das Befestigungselement 37 aus den Ausnehmungen 31 gezogen. Mit dem Lösen des Befestigungselementes 37 wird der Ährenheber 22 von dem Mähfinger 7 aufgrund der von der Tragschiene 23 hervorgerufenen Federkraft wegbewegt. In dieser Stellung des Ährenhebers 22 lässt sich das zwischen den beiden plattenförmigen Elementen 39, 40 eingefasste erste Ende 24 der Tragschiene 23 herausziehen.

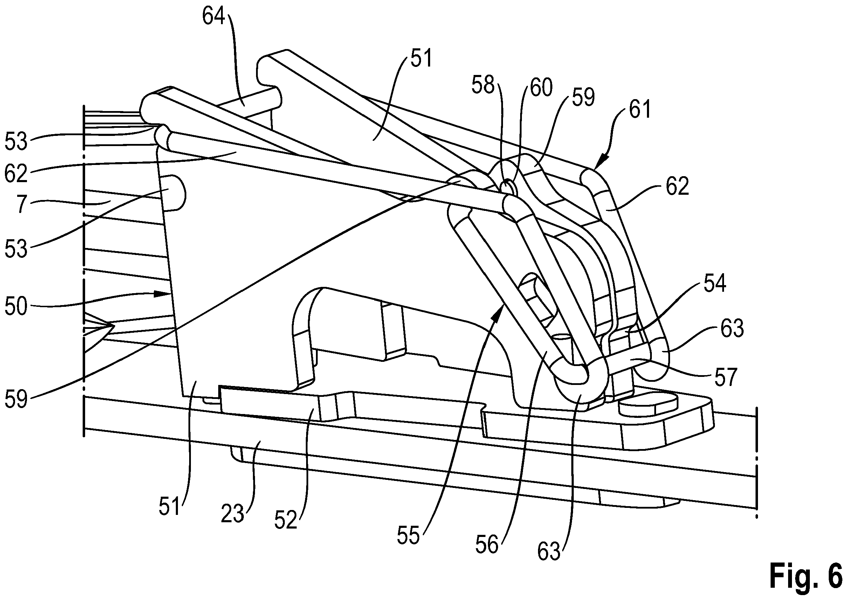

In Fig. 6 ist eine zweite Ausführungsform einer Verriegelungseinrichtung in ihrer Verriegelungsstellung dargestellt. Diese umfasst eine Aufnahmeführung 50, welche von zwei sich in Längsrichtung und senkrecht zu der Tragschiene 23 erstreckenden Wandabschnitten 51 gebildet wird. Die Aufnahmeführung 50 ist U-förmig ausgebildet und kann, wie in Fig. 6 dargestellt, mehrteilig als eine Schweißkonstruktion oder bevorzugt, einteilig, als Guss- oder Formteil ausgebildet sein. Die Wandabschnitte 51 sind auf einer Befestigungsplatte 52 angeordnet, mittels der die Aufnahmeführung 50 auf der Tragschiene 23 des Ährenhebers 22 vorzugsweise lösbar befestigbar ist. Die Wandabschnitte 51 sind derart zueinander angeordnet, dass sie in Richtung des auslaufenden Mähfingers 7 einen sich verjüngenden Verlauf aufweisen. Dies dient der Erhöhung der Stabilität der Verriegelungseinrichtung. Die Wandabschnitte 51 sind auf ihrer dem Messerbalken 5 zugewandten, senkrecht zur Oberfläche der Tragschiene 23 verlaufenden Seite mit zumindest einer Ausnehmung 53 versehen. Auf der dem Messerbalken 5 abgewandten, senkrecht zur Oberfläche des Tragarmes 23 verlaufenden Seite weisen die Wandabschnitte 51 Verriegelungsprofilierungen 54 auf. Der vertikale Abstand der zumindest einen Ausnehmung 53 zu der Befestigungsplatte 52 ist größer, als der vertikale Abstand der Verriegelungsprofilierungen 54 zu der Befestigungsplatte 52. In dem Wandabschnitte 51 sind gemäß dem dargestellten Ausführungsbeispiel zwei Ausnehmung 53 in unterschiedlichen Abständen zur Tragschiene 23 angeordnet, wodurch eine Höhenanpassung der Tragschiene 23 im Verhältnis zum Mähfinger 7 möglich ist.

Weiterhin umfasst die Verriegelungseinrichtung gemäß der zweiten Ausführungsform eine Bügelanordnung, welche einen ersten Bügel 55 und einen zweiten Bügel 61 umfasst. Der erste Bügel 55 ist im Wesentlichen U-förmig ausgeführt. Ein querverlaufender Arm 57 verbindet zwei zueinander parallele Arme 56 des ersten Bügels 55 miteinander. An den freien Enden der parallelen Arme 56 sind endseitig einander zugewandte Endabschnitte 58 vorgesehen.

Für eine verliersicheren Anbringung des Verriegelungsmittels 33 an der Aufnahmeführung 50 weist der jeweilige Wandabschnitt 51 an seiner der Tragschiene 23 abgewandten Oberseite einen Vorsprung 59 mit einer Durchtrittsöffnung 60 auf. Die jeweilige Durchtrittsöffnung 60 dient der Aufnahme des jeweiligen Endabschnittes 58 des ersten Bügels 55. Der Vorsprung 59 bildet eine Lagerstelle für den ersten Bügel 55, indem die einander zugewandten Endabschnitte des ersten Bügels 55 in die Durchtrittsöffnungen 60 eingebracht werden. Der erste Bügel 55 ist dadurch um eine horizontal verlaufende Drehachse schwenkbar.

Der zweite Bügel 61 ist ebenfalls im Wesentlichen U-förmig ausgebildet, wobei die zueinander parallelen Arme 62 des zweiten Bügels 61 abgewinkelt ausgeführt sind. Die zueinander parallelen Arme 62 des zweiten Bügels 61 sind durch einen querverlaufenden Arm 64 miteinander verbunden. An ihren freien Enden sind die zueinander parallelen Arme 62 des zweiten Bügels 61 jeweils zu einer Öse 63 geformt, welche den quer verlaufenden Arm 57 des ersten Bügels 55 umfassen. Der quer verlaufende Arm 57 des ersten Bügels 55 bildet eine Drehachse für den zweiten Bügel 61. Der querverlaufende Arm 64 befindet sich in der Verriegelungsstellung des Verriegelungsmittels 33 im formschlüssigen Eingriff mit den sich auf einer Höhe befindenden Ausnehmungen 53 der Aufnahmeführung 50. Zwecks einer Höhenanpassung lässt sich der querverlaufende Arm 64 in die tieferliegenden Ausnehmungen 53 einbringen.

Ausgehend von der dargestellten Verriegelungsstellung erfolgt das Entriegeln des Verriegelungsmittels 33 zum Lösen des Ährenhebers 22 durch das Hochschwenken des ersten Bügels 55 um seine Drehachse. Hierdurch wird die Totpunktlage des zweiten Bügels 61 überwunden, so dass dessen querverlaufender Arm 64 außer Eingriff mit den Ausnehmungen 53 der Aufnahmeführung 50 bringbar ist. Nun lässt sich der Ährenheber 22 wie weiter oben bereits ausgeführt vom Mähbalken 5 lösen.

Das Verriegeln erfolgt entsprechend in umgekehrter Reihenfolge. Zunächst wird der querverlaufende Arm 64 des zweiten Bügels 61 formschlüssig mit den Ausnehmungen 53 der Aufnahmeführung 50 in Eingriff gebracht. Im Anschluss daran wird der erste Bügel 55 in Richtung der Verriegelungsprofilierungen 54 geschwenkt, bis der querverlaufende Arm 57 des ersten Bügels 55 in diesen an der Aufnahmeführung 50 anliegt.

**Bezugszeichenliste**

| | | | |
|---|---|---|---|
| 1 | Schneidwerk | 31 | Ausnehmung |
| 2 | Schneidtisch | 32 | Verriegelungsprofilierung |
| 3 | Schneidwerksmulde | 33 | Verriegelungselement |
| 4 | Trennebene | 34 | Raststege |
| 5 | Mähbalken | 35 | Profilierung |
| 6 | Messerklinge | 36 | Hebelabschnitt |
| 7 | Mähfinger | 37 | Befestigungselement |
| 8 | Messergetriebe | 38 | Befestigungsabschnitt |
| 9 | Kurbelzapfens | 39 | Erstes Element |
| 10 | Querförderer | 40 | Zweites Element |
| 11 | Schneckengang | 41 | Mutter |
| 12 | Schneckengang | 42 | Zylindrischer Abschnitt |
| 13 | Schrägförderer | 43 | Vierkantansatz |
| 14 | Welle | 44 | Messerdaumen |
| 15 | Kardanwelle | | |
| 16 | Getriebebaugruppe | 50 | Aufnahmeführung |
| 17 | Abtriebswelle | 51 | Wandabschnitt |
| 18 | Gelenkwelle | 52 | Befestigungsplatte |
| 19 | Eingangswelle | 53 | Ausnehmung |
| 20 | Schneidwerksrahmen | 54 | Verriegelungsprofilierung |
| 21 | Messerschiene | 55 | Erster Bügel |
| 22 | Ährenheber | 56 | Arm von 55 |
| 23 | Tragschiene | 57 | Querverlaufender Arm von 55 |
| 24 | Erstes Ende | 58 | Endabschnitt von 55 |
| 25 | Zweites Ende | 59 | Vorsprung |
| 26 | Halmheber | 60 | Durchtrittsöffnung |
| 27 | Wellenförmiger Abschnitt | 61 | Zweiter Bügel |
| 28 | Schraubverbindung | 62 | Abgewinkelter Arm von 61 |
| 29 | Aufnahmeführung | 63 | Öse |
| 30 | Schenkel | 64 | Querverlaufender Arm von 61 |

## Patentansprüche

1. Schneidwerk (1), welches einen Mähbalken (5) mit davon vorstehend angeordneten Mähfingern (7) sowie einen Ährenheber aufweist, der Ährenheber umfasst:
- eine biegeelastische Tragschiene (23) mit einem ersten Ende (24) zur Anordnung an dem Mähbalken (5) und einem zweiten Ende (25),
- einen an dem zweiten Ende (25) der Tragschiene (23) angeordneten Halmheber (26),
- eine auf der dem Halmheber (26) zugewandten Seite der Tragschiene (23) angeordnete Aufnahmeführung (29, 50), welche einen Mähfinger (7) in an dem Mähbalken (5) montierter Position des Ährenhebers (22) abschnittsweise umschließt,
wobei an der Aufnahmeführung (29, 50) ein bügelförmiges Verriegelungsmittel (33) angeordnet ist, welches mit der Aufnahmeführung (29, 50) in verriegelter Stellung formschlüssig in Eingriff steht und mit einer Federkraft belastet ist, wobei die dabei auf das Verriegelungsmittel (33) einwirkende Federkraft von diesem aufbringbar ist, **dadurch gekennzeichnet, dass** die Tragschiene (23) im Bereich des ersten Endes (24) einen Abschnitt (27) mit einem im Wesentlichen wellenförmig geschwungenen Verlauf aufweist,
wobei sich die Tragschiene (23) mit einem ersten konvexen Segment des Abschnitts (27) an dem Mähfinger (7) abstützt.

2. Schneidwerk nach Anspruch 1, **dadurch gekennzeichnet, dass** die Tragschiene (23) mit ihrem ersten Ende (24) auf einen unterhalb des Mähfingers (5) angeordneten Befestigungsabschnitt (38) eines Befestigungselementes (37) aufsteckbar und relativ zu dem Befestigungselement (37) um eine horizontale Achse in Richtung des Mähfingers (7) schwenkbar ist, bis sich die Tragschiene (23) im Bereich des ersten Endes (24) an dem Mähfinger (7) abschnittsweise abstützt.

3. Schneidwerk nach Anspruch 2, **dadurch gekennzeichnet, dass** das Befestigungselement (37) der Befestigung des Mähfingers (7) an dem Messerbalken (5) dient.

4. Schneidwerk nach einem der Ansprüche 2 oder 3, **dadurch gekennzeichnet, dass** der Befestigungsabschnitt (38) aus einem ersten plattenförmigen Element (39) und einem zweiten plattenförmigen Element (40) gebildet ist, die parallel zueinander beabstandet angeordnet sind, und einen sich an das erste plattenförmige Element (39) anschließenden zylindrischen Abschnitt (42) aufweist.

5. Schneidwerk nach Anspruch 4, **dadurch gekennzeichnet, dass** der Befestigungsabschnitt (38) zwischen seinem ersten plattenförmigen Element (39) und dem zweiten plattenförmigen Element (40) einen Vierkantansatz (43) aufweist.

6. Schneidwerk nach einem der Ansprüche 1 bis 5, **dadurch gekennzeichnet, dass** das erste Ende (24) der Tragschiene (23) gabelförmig ausgebildet ist.

7. Schneidwerk nach einem der Ansprüche 1 bis 6, **dadurch gekennzeichnet, dass** die Aufnahmeführung (29, 50) lösbar mit der Tragschiene (23) verbunden ist.

8. Schneidwerk nach einem der Ansprüche 1 bis 7, **dadurch gekennzeichnet, dass** vertikal verlaufende Schenkel (30) der Aufnahmeführung (29) auf ihrer dem Mähbalken (5) zugewandten Seite Ausnehmungen (31) aufweisen, in welche an dem Verriegelungsmittel (33) angeordnete Raststege (34) eingreifen, so dass das Verriegelungsmittel (33) um die Raststege (34) schwenkbar ist.

9. Schneidwerk nach Anspruch 8, **dadurch gekennzeichnet, dass** die vertikal verlaufenden Schenkel (30) der Aufnahmeführung (29) auf ihrer dem Mähbalken (5) abgewandten Seite jeweils mit zumindest einer Verriegelungsprofilierung (32) versehen sind, welche mit einer korrespondierenden Profilierung (35) an dem Verriegelungsmittel (33) in Eingriff bringbar ist.

10. Schneidwerk nach einem der Ansprüche 1 bis 7, **dadurch gekennzeichnet, dass** das Verriegelungsmittel (33) als eine Bügelanordnung ausgebildet ist, die einen ersten, an der Aufnahmeführung (50) einem Ende drehbar gelagert angeordneten Bügel (55) und einen zweiten Bügel (61) umfasst, der schwenkbar am freien Ende des ersten Bügels (55) angeordnet ist.

11. Schneidwerk nach Anspruch 10, **dadurch gekennzeichnet, dass** vertikal verlaufende Wandabschnitte (51) der Aufnahmeführung (50) auf ihrer dem Mähbalken (5) zugewandten Seite mit zumindest einer Ausnehmung (53) versehen sind, mit welchen der zweite Bügel (61) formschlüssig in Eingriff bringbar ist.

12. Schneidwerk nach Anspruch 10, **dadurch gekennzeichnet, dass** vertikal verlaufende Wandabschnitte (51) der Aufnahmeführung (50) auf ihrer dem Mähbalken (5) abgewandten Seite eine Verriegelungsprofilierung (54) aufweisen, mit welchen der erste Bügel (55) abschnittsweise in Eingriff bringbar ist.

13. Schneidwerk (1) nach einem der vorherigen Ansprüche, **dadurch gekennzeichnet, dass** der Ährenheber (22) werkzeuglos an den Mähbalken (5) montierbar und demontierbar ist.

## Claims

1. A header (1) having a cutter bar (5) with cutter fingers (7) arranged projecting therefrom and an ear lifter, wherein the ear lifter includes:
- a flexurally elastic carrier rail (23) having a first end (24) for arrangement on the cutter bar (5) and a second end (25),
- a stalk lifter (26) arranged at the second end (25) of the carrier bar (23),
- a receiving guide means (29, 50) which is arranged on the side of the carrier rail (23) that is towards the stalk lifter (26) and which portion-wise surrounds a cutter finger (7) in the position of the ear lifter (22) of being mounted to the cutter bar (5),
wherein arranged at the receiving guide means (29, 50) is a bow-shaped locking means (33) which is in positively locking engagement with the receiving guide means (29, 50) in the locked position and is loaded with a spring force, wherein the spring force acting in that case on the locking means (33) can be applied thereby, **characterised in that** in the region of the first end (24) the carrier rail (23) has a portion (27) of a substantially wavy-curved configuration, wherein the carrier rail (23) is supported with a first convex segment of the portion (27) on the cutter finger (7).

2. A header according to claim 1 **characterised in that** the carrier rail (23) can be fitted with its first end (24) on to a fixing portion (38), arranged beneath the cutter finger (5), of a fixing element (37) and is pivotable relative to the fixing element (37) about a horizontal axis in the direction of the cutter finger (7) until the carrier rail (23) is supported portion-wise in the region of the first end (24) on the cutter finger (7).

3. A header according to claim 2 **characterised in that** the fixing element (37) serves for fixing the cutter finger (7) to the cutter bar (5).

4. A header according to one of claims 2 and 3 **characterised in that** the fixing portion (38) is formed from a first plate-shaped element (39) and a second plate-shaped element (40) which are arranged in mutually parallel spaced relationship, and has a cylindrical portion (42) adjoining the first plate-shaped element (39).

5. A header according to claim 4 **characterised in that** the fixing portion (38) has a square attachment portion (43) between its first plate-shaped element (39) and the second plate-shaped element (40).

6. A header according to one of claims 1 to 5 **characterised in that** the first end (24) of the carrier rail (23) is of a forked configuration.

7. A header according to one of claims 1 to 6 **characterised in that** the receiving guide means (29, 50) is releasably connected to the carrier rail (23).

8. A header according to one of claims 1 to 7 **characterised in that** vertically extending limbs (30) of the receiving guide means (29) have on the side thereof towards the cutter bar (50) recesses (31) into which latching legs (34) arranged on the locking means (33) engage so that the locking means (33) is pivotable about the latching legs (34).

9. A header according to claim 8 **characterised in that** the vertically extending limbs (30) of the receiving guide means (29) are respectively provided on the side thereof facing away from the cutter bar (5) with at least one locking profile means (32) which can be brought into engagement with a corresponding profile means (35) on the locking means (33).

10. A header according to one of claims 1 to 7 **characterised in that** the locking means (33) is in the form of a bow arrangement which includes a first bow (55) arranged mounted rotatably at one end on the receiving guide means (50) and a second bow (61) arranged pivotably at the free end of the first bow (55).

11. A header according to claim 10 **characterised in that** vertically extending wall portions (51) of the receiving guide means (50) are provided on the side thereof towards the cutter bar (5) with at least one recess (53) with which the second bow (61) can be brought into positively locking engagement.

12. A header according to claim 10 **characterised in that** vertically extending wall portions (51) of the receiving guide means (50) have on the side thereof facing away from the cutter bar (5) a locking profile means (54) with which the first bow (55) can be brought portion-wise into engagement.

13. A header (1) according to one of the preceding claims **characterised in that** the ear lifter (22) can be fitted to and removed from the cutter bar (5) without a tool.

## Revendications

1. Tablier de coupe (1) qui comprend un lamier (5) avec des doigts de coupe (7) disposés en saillie ainsi qu'un releveur d'épis, le releveur d'épis comprenant :
- un rail porteur élastique en flexion (23) avec une première extrémité (24) pour le disposer sur le lamier (5) et avec une seconde extrémité (25),
- un releveur de tiges (26) disposé sur la seconde extrémité (25) du rail porteur (23),
- un guide de positionnement (29, 50) qui est disposé sur le côté du rail porteur (23) orienté vers le releveur de tiges (26) et qui, dans la position du releveur d'épis (22) montée sur le lamier (5), entoure par endroits un doigt de coupe (7),
sur le guide de positionnement (29, 50) étant disposé un moyen de verrouillage en forme d'étrier (33) qui, en position verrouillée, est en prise avec le guide de positionnement (29, 50) par complémentarité de formes et est sollicité par une force élastique, la force élastique agissant alors sur le moyen de verrouillage (33) pouvant être exercée par celui-ci, **caractérisé en ce que** le rail porteur (23) comporte, dans la zone de la première extrémité (24), une portion (27) avec un tracé sensiblement ondulé,
le rail porteur (23) prenant appui sur le doigt de coupe (7) par un premier segment convexe de la portion (27).

2. Tablier de coupe selon la revendication 1, **caractérisé en ce que** le rail porteur (23) est enfichable, par sa première extrémité (24), sur une portion de fixation (38) d'un élément de fixation (37) disposée sous le doigt de coupe (5) et est pivotant par rapport à l'élément de fixation (37) autour d'un axe horizontal en direction du doigt de coupe (7) jusqu'à ce que le rail porteur (23) prenne appui par endroits contre le doigt de coupe (7) dans la zone de la première extrémité (24).

3. Tablier de coupe selon la revendication 2, **caractérisé en ce que** l'élément de fixation (37) sert à fixer le doigt de coupe (7) au lamier (5).

4. Tablier de coupe selon une des revendications 2 ou 3, **caractérisé en ce que** la portion de fixation (38) est formée d'un premier élément en forme de plaque (39) et d'un second élément en forme de plaque (40), lesquels sont disposés parallèlement à distance l'un de l'autre, et comporte une portion cylindrique (42) qui se raccorde au premier élément en forme de plaque (39).

5. Tablier de coupe selon la revendication 4, **caractérisé en ce qu'**entre son premier élément en forme de plaque (39) et le second élément en forme de plaque (40), la portion de fixation (38) comporte une embase carrée (43).

6. Tablier de coupe selon une des revendications 1 à 5, **caractérisé en ce que** la première extrémité (24) du rail porteur (23) est conformée en fourchette.

7. Tablier de coupe selon une des revendications 1 à 6, **caractérisé en ce que** le guide de positionnement (29, 50) est relié au rail porteur (23) de façon amovible.

8. Tablier de coupe selon une des revendications 1 à 7, **caractérisé en ce que** des ailes s'étendant verticalement (30) du guide de positionnement (29) sont pourvues, sur leur côté orienté vers le lamier (5), d'évidements (31) dans lesquels pénètrent des pattes de crantage (34) disposées sur le moyen de verrouillage (33), de sorte que le moyen de verrouillage (33) peut pivoter autour des pattes de crantage (34).

9. Tablier de coupe selon la revendication 8, **caractérisé en ce que** les ailes s'étendant verticalement (30) du guide de positionnement (29) sont chacune munies, sur leur côté orienté à l'opposé du lamier (5), d'au moins un profil de verrouillage (32) qui peut être amené en prise avec un profil correspondant (35) sur le moyen de verrouillage (33).

10. Tablier de coupe selon une des revendications 1 à 7, **caractérisé en ce que** le moyen de verrouillage (33) est conformé en agencement en étrier qui comporte un premier étrier (55), monté à pivotement sur une extrémité du guide de positionnement (50), et un second étrier (61) qui est disposé pivotant sur l'extrémité libre du premier étrier (55).

11. Tablier de coupe selon la revendication 10, **caractérisé en ce que** des portions de paroi s'étendant verticalement (51) du guide de positionnement (50) sont pourvues, sur leur côté orienté vers le lamier (5), d'au moins un évidement (53) avec lequel le second étrier (61) peut être amené en prise par complémentarité de formes.

12. Tablier de coupe selon la revendication 10, **caractérisé en ce que** des portions de paroi s'étendant verticalement (51) du guide de positionnement (50) comportent, sur leur côté orienté à l'opposé du lamier (5), un profil de verrouillage (54) avec lequel le premier étrier (55) peut être amené en prise par endroits.

13. Tablier de coupe (1) selon une des revendications précédentes, **caractérisé en ce que** le releveur d'épis (22) peut être monté sur le lamier (5) et démonté sans outil.
